(19) **Europäisches Patentamt / European Patent Office / Office européen des brevets**

(11) **EP 2 015 466 B1**

(12) **EUROPEAN PATENT SPECIFICATION**

(45) Date of publication and mention
of the grant of the patent:
**25.04.2012 Bulletin 2012/17**

(51) Int Cl.:
*H04W 52/10* (2009.01)   *H04W 52/08* (2009.01)
*H04W 52/12* (2009.01)   *H04W 52/06* (2009.01)
*H04W 52/18* (2009.01)   *H04W 52/22* (2009.01)
*H04W 52/24* (2009.01)   *H04W 52/54* (2009.01)
*H04W 52/50* (2009.01)   *H04W 52/20* (2009.01)

(21) Application number: **08167691.8**

(22) Date of filing: **22.03.2000**

(54) **Weighted open loop power control in a time division duplex communication system**

Leistungsregelung mit gewichteter offener Schleife in einem Zeitduplex-Kommunikationssystem

Commande de puissance en boucle ouverte pondérée dans un système de communication duplex à répartition dans le temps

(84) Designated Contracting States:
**AT BE CH CY DE DK ES FI FR GB GR IE IT LI LU MC NL PT SE**

(30) Priority: **22.03.1999 US 125417 P
28.05.1999 US 136556 P
28.05.1999 US 136557 P**

(43) Date of publication of application:
**14.01.2009 Bulletin 2009/03**

(62) Document number(s) of the earlier application(s) in accordance with Art. 76 EPC:
**05104850.2 / 1 578 030
03013811.9 / 1 349 294
00921420.6 / 1 163 738**

(73) Proprietor: **Interdigital Technology Corporation
Wilmington, DE 19810 (US)**

(72) Inventors:
• **Zeira, Ariela
Huntington, NY 11743 (US)**
• **Shin, Sung-Hyuk
Northvale, NJ 07647 (US)**

(74) Representative: **Badel, Xavier Claude Yves
AWAPATENT AB
Box 45086
104 30 Stockholm (SE)**

(56) References cited:
**EP-A- 0 462 952      EP-A- 0 610 030
WO-A-97/49197      WO-A-98/45962
US-A- 5 542 111**

**Description**

**BACKGROUND**

This invention generally relates to spread spectrum time division duplex (TDD) communication systems. More particularly, the present invention relates to a transmitter for controlling transmission power within spread spectrum TDD communication systems.

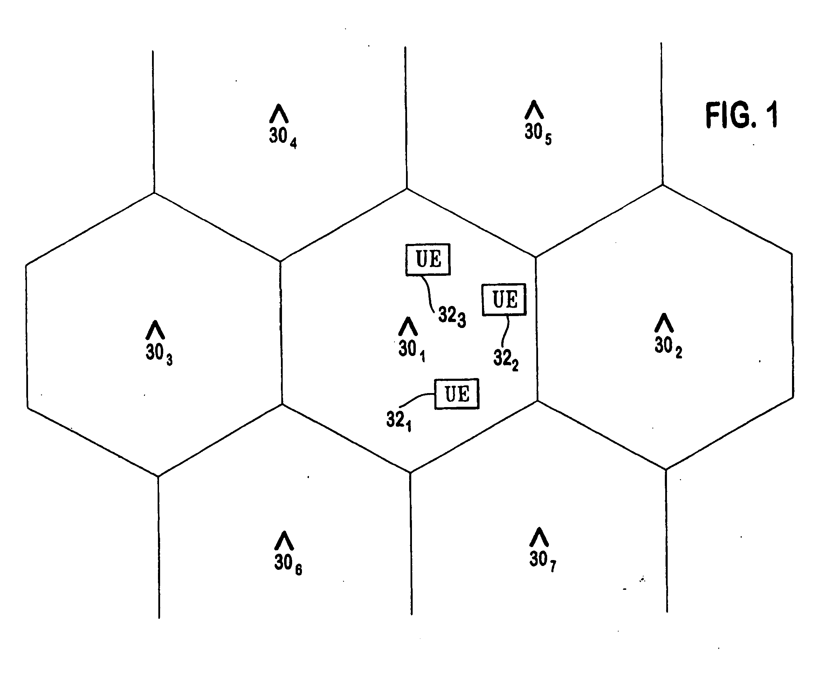

**Figure 1** depicts a wireless spread spectrum time division duplex (TDD) communication system. The system has a plurality of base stations $30_1$-$30_7$. Each base station $30_1$ communicates with user equipments (UEs) $32_1$-$32_3$ in its operating area. Communications transmitted from a base station $30_1$ to a UE $32_1$ are referred to as downlink communications and communications transmitted from a UE $32_1$ to a base station $30_1$ are referred to as uplink communications.

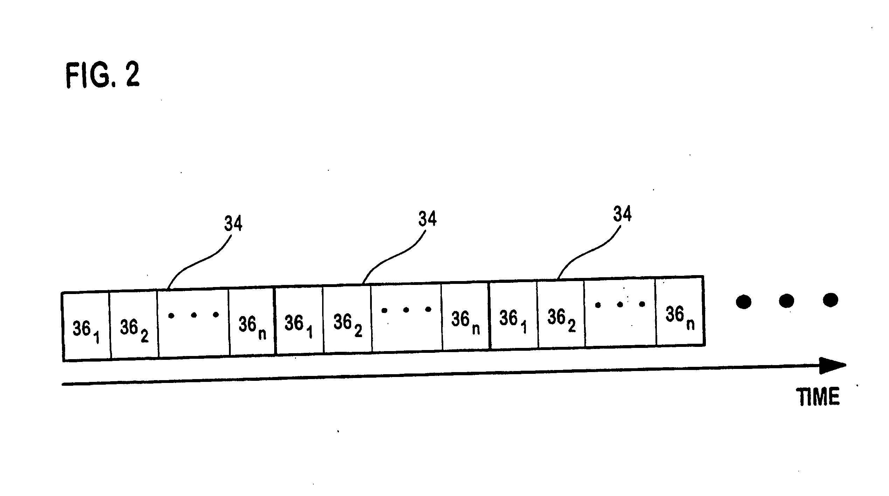

In addition to communicating over different frequency spectrums, spread spectrum TDD systems carry multiple communications over the same spectrum. The multiple signals are distinguished by their respective chip code sequences (codes). Also, to more efficiently use the spread spectrum, TDD systems as illustrated in **Figure 2** use repeating frames **34** divided into a number of time slots $36_1$-$36_n$, such as fifteen time slots. In such systems, a communication is sent in selected time slots $36_1$-$36_n$ using selected codes. Accordingly, one frame **34** is capable of carrying multiple communications distinguished by both time slot $36_1$-$36_n$ and code. The use of a single code in a single time slot is referred to as a resource unit. Based on the bandwidth required to support a communication, one or multiple resource units are assigned to that communication.

Most TDD systems adaptively control transmission power levels. In a TDD system, many communications may share the same time slot and spectrum. When a UE $32_1$ or base station $30_1$ is receiving a specific communication, all the other communications using the same time slot and spectrum cause interference to the specific communication. Increasing the transmission power level of one communication degrades the signal quality of all other communications within that time slot and spectrum. However, reducing the transmission power level too far results in undesirable signal to noise ratios (SNRs) and bit error rates (BERs) at the receivers. To maintain both the signal quality of communications and low transmission power levels, transmission power control is used.

One approach using transmission power control in a code division multiple access (CDMA) communication system is described in U.S. Patent No. 5,056,109 (Gilhousen et al.). A transmitter sends a communication to a particular receiver. Upon reception, the received signal power is measured. The received signal power is compared to a desired received signal power. Based on the comparison, a control bit is sent to the transmitter either increasing or decreasing transmission power by a fixed amount. Since the receiver sends a control signal to the transmitter to control the transmitter's power level, such power control techniques are commonly referred to as closed loop.

Under certain conditions, the performance of closed loop systems degrades. For instance, if communications sent between a UE $32_1$ and a base station $30_1$ are in a highly dynamic environment, such as due to the UE $32_1$ moving, such systems may not be able to adapt fast enough to compensate for the changes. The update rate of closed loop power control in a typical TDD system is 100 cycles per second which is not sufficient for fast fading channels. Accordingly, there is a need for alternate approaches to maintain signal quality and low transmission power levels.

EP-A-0462952 discloses a method of regulating or adjusting transmission power for signals between a mobile station and a base station in a digital mobile telephony system. To determine the transmission power level, the mean values of the signal strength and transmission quality are determined. Based on the mean values, an anticipated signal strength and signal quality are calculated for a subsequent time period, assuming the transmission power is maintained unchanged. The transmission power level at the subsequent time period is adjusted based on the anticipated values.

WO 98/45962 discloses an open-loop power control transmitter.

**SUMMARY**

The invention controls transmission power levels in a spread spectrum time division duplex transmitter according to claim 1.

**BRIEF DESCRIPTION OF THE DRAWINGS**

**Figure 1** illustrates a prior art TDD system.
**Figure 2** illustrates time slots in repeating frames of a TDD system.
**Figure 3** is a flow chart of weighted open loop power control.
**Figure 4** is a diagram of components of two communication stations using weighted open loop power control.

**Figure 5** depicts a graph of the performance of a weighted open loop, open loop and closed loop power control system for a UE moving at 30 kilometers per hour (km/h).

**Figure 6** depicts a graph of the three systems' performance for a UE moving at 60 km/h.

## DETAILED DESCRIPTION OF THE PREFERRED EMBODIMENTS

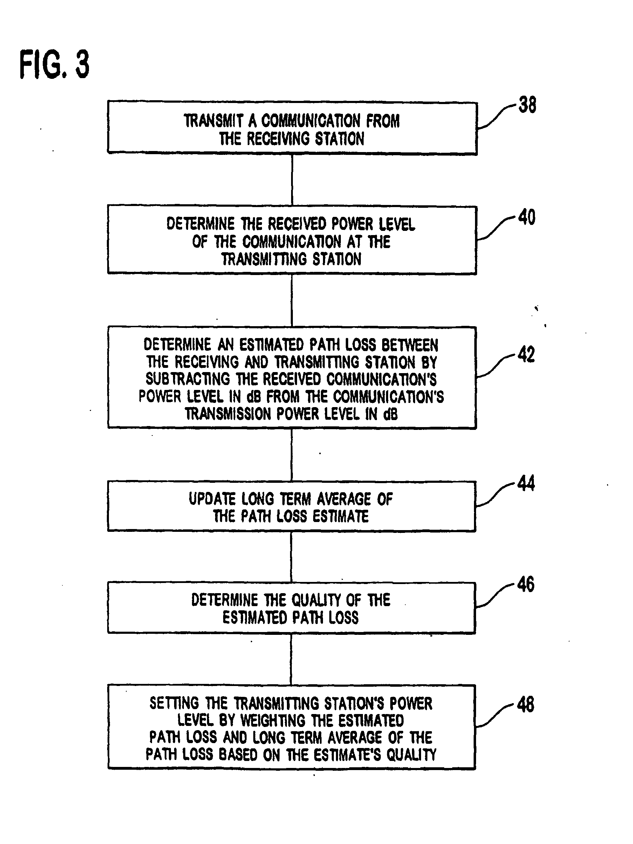

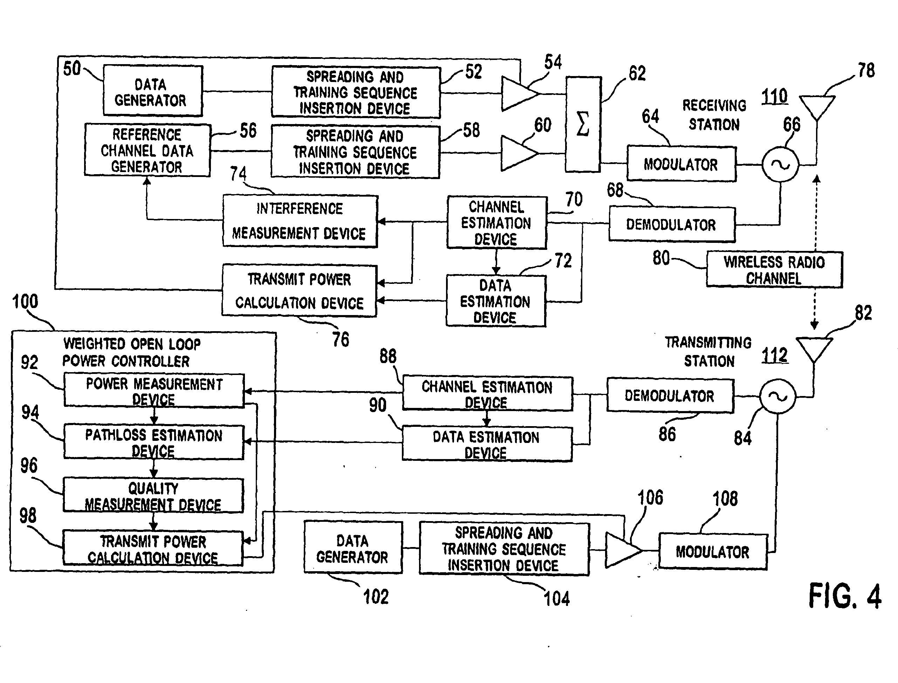

The preferred embodiments will be described with reference to the drawing figures where like numerals represent like elements throughout. Weighted open loop power control will be explained using the flow chart of **Figure 3** and the components of two simplified communication stations **110**, **112** as shown in **Figure 4**. For the following discussion, the communication station having its transmitter's power controlled is referred to as the transmitting station **112** and the communication station receiving power controlled communications is referred to as the receiving station **110**. Since weighted open loop power control may be used for uplink, downlink or both types of communications, the transmitter having its power controlled may be located at a base station $30_1$, UE $32_1$ or both. Accordingly, if both uplink and downlink power control are used, the receiving and transmitting station's components are located at both the base station $30_1$ and UE $32_1$. For use in estimating the path loss between the receiving and transmitting stations **110, 112,** the receiving station **110** sends a communication to the transmitting station **112**. The communication may be sent on any one of various channels. Typically, in a TDD system, the channels used for estimating path loss are referred to as reference channels, although other channels may be used. If the receiving station **110** is a base station $30_1$, the communication is preferably sent over a downlink common channel or a Common Control Physical Channel (CCPCH).

Data to be communicated to the transmitting station **112** over the reference channel is referred to as reference channel data. The reference channel data is generated by a reference channel data generator **56**. The reference data is assigned one or multiple resource units based on the communication's bandwidth requirements. A spreading and training sequence insertion device **58** spreads the reference channel data and makes the spread reference data time-multiplexed with a training sequence in the appropriate time slots and codes of the assigned resource units. The resulting sequence is referred to as a communication burst. The communication burst is subsequently amplified by an amplifier **60**. The amplified communication burst may be summed by a sum device **62** with any other communication burst created through devices, such as a data generator **50**, spreading and training sequence insertion device **52** and amplifier **54**. The summed communication bursts are modulated by a modulator **64**. The modulated signal is passed through an isolator **66** and radiated by an antenna **78** as shown or, alternately, through an antenna array, step **38.** The radiated signal is passed through a wireless radio channel **80** to an antenna **82** of the transmitting station **112**. The type of modulation used for the transmitted communication can be any of the those known to those skilled in the art, such as direct phase shift keying (DPSK) or quadrature phase shift keying (QPSK).

The antenna **82** or, alternately, antenna array of the transmitting station **112** receives various radio frequency signals. The received signals are passed through an isolator **84** to a demodulator **86** to produce a baseband signal. The baseband signal is processed, such as by a channel estimation device **88** and a data estimation device **90**, in the time slots and with the appropriate codes assigned to the communication's burst. The channel estimation device **88** commonly uses the training sequence component in the baseband signal to provide channel information, such as channel impulse responses. The channel information is used by the data estimation device **90** and a power measurement device **92**. The power level of the processed communication corresponding to the reference channel, $R_{TS}$, is measured by the power measurement device **92** and sent to a pathloss estimation device **94**, step **40.** The channel estimation device **88** is capable of separating the reference channel from all other channels. If an automatic gain control device or amplifier is used for processing the received signals, the measured power level is adjusted to correct for the gain of these devices at either the power measurement device **92** or the pathloss estimation device **94.**

To determine the path loss, L, the transmitting station **112** also requires the communication's transmitted power level, $T_{RS}$. The transmitted power level, $T_{RS}$, may be sent along with the communication's data or in a signaling channel. If the power level, $T_{RS}$, is sent along with the communication's data, the data estimation device **90** interprets the power level and sends the interpreted power level to the pathloss estimation device **94**. If the receiving station **110** is a base station $30_1$, preferably the transmitted power level, $T_{RS}$, is sent via the broadcast channel (BCH) from the base station $30_1$. By subtracting the received communication's power level, $R_{TS}$ in dB, from the sent communication's transmitted power level, $T_{RS}$ in dB, the pathloss estimation device **94** estimates the path loss, L, between the two stations **110,112,** step **42**. Additionally, a long term average of the pathloss, $L_0$, is updated, step **44**. In certain situations, instead of transmitting the transmitted power level, $T_{RS}$, the receiving station **110** may transmit a reference for the transmitted power level. In that case, the pathloss estimation device **94** provides reference levels for the path loss, L, and the long term average of the path loss, $L_0$.

Since TDD systems transmit downlink and uplink communications in the same frequency spectrum, the conditions these communications experience are similar. This phenomenon is referred to as reciprocity. Due to reciprocity, the path loss experienced for the downlink will also be experienced for the uplink and vice versa. By adding the estimated path loss to a desired received power level, a transmission power level for a communication from the transmitting station **112** to the receiving station **110** is determined. This power control technique is referred to as open loop power control.

Open loop systems have drawbacks. If a time delay exists between the estimated path loss and the transmitted communication, the path loss experienced by the transmitted communication may differ from the calculated loss. In TDD where communications are sent in differing time slots $36_1$-$36_n$, the time slot delay between received and transmitted communications may degrade the performance of an open loop power control system. To overcome these drawbacks, a quality measurement device 96 in a weighted open loop power controller 100 determines the quality of the estimated path loss, step **46**. The quality measurement device **96** also weights the estimated path loss, L, and long term average of the pathloss, $L_0$, to set the transmit power level by transmit power calculation device **98,** step **48**. As illustrated in **Figure 4**, the weighted open loop power controller **100** consists of the power measurement device **92**, pathloss estimation device **94,** quality measurement device **96**, and transmit power calculation device **98.**

The following is one of the preferred weighted open loop power control algorithms. The transmitting station's power level in decibels, $P_{TS}$, is determined using **Equation 1.**

$$P_{TS} = P_{RS} + \alpha(L-L_0) + L_0 + \text{CONSTANT VALUE} \qquad \text{Equation 1}$$

$P_{RS}$ is the power level that the receiving station **110** desires to receive the transmitting station's communication in dB. $P_{RS}$ is determined by the desired SIR, $SIR_{TARGET}$, at the receiving station 110 and the interference level, $I_{RS}$, at the receiving station **110.**

To determine the interference level, $I_{RS}$, at the receiving station, received communications from the transmitting station **112** are demodulated by a demodulator **68**. The resulting baseband signal is processed, such as by a channel estimation device **70** and a data estimator device **72** in the time slots and with the appropriate codes assigned the transmitting station's communications. The channel information produced by the channel estimation device **70** is used by an interference measurement device **74** to determine the interference level, $I_{RS}$. The channel information may also be used to control the transmit power level of the receiving station **110**. The channel information is input to a data estimation device **72** and a transmit power calculation device **76**. The data estimation produced by the data estimation device **72** is used with the channel information by the transmit power calculation device **76** to control the amplifier **54** which controls the receiving station's transmit power level. $P_{RS}$ is determined using Equation **2**.

$P_{RS}$ is determined using **Equation 2**.

$$P_{RS} = SIR_{TARGET} + I_{RS} \qquad \text{Equation 2}$$

$I_{RS}$ is either signaled or broadcasted from the receiving station **110** to the transmitting station **112**. For downlink power control, $SIR_{TARGET}$ is known at the transmitting station **112**. For uplink power control, $SIR_{TARGET}$ is signaled from the receiving station 110 to the transmitting station **112**. Using Equation 2, **Equation 1** is rewritten as either Equations **3** or **4.**

$$P_{TS} = SIR_{TARGET} + I_{RS} + \alpha(L-L_0) + L_0 + \text{CONSTANT VALUE} \qquad \text{Equation 3}$$

$$P_{TS} = \alpha L + (1-\alpha)L_0 + I_{RS} + SIR_{TARGET} + \text{CONSTANT VALUE} \qquad \text{Equation 4}$$

L is the path loss estimate in decibels, $T_{RS}$ - $R_{TS}$, for the most recent time slot $36_1$-$36_n$ that the path loss was estimated. The long term average of the pathloss, $L_0$, is a running average of the path loss estimates L. The CONSTANT VALUE is a correction term. The CONSTANT VALUE corrects for differences in the uplink and downlink channels, such as to compensate for differences in uplink and downlink gain. Additionally, the CONSTANT VALUE may provide correction if the transmit power reference level of the receiving station is transmitted, instead of the actual transmit power, $T_{RS}$. If the receiving station is a base station $30_1$, the CONSTANT VALUE is preferably sent via Layer 3 signaling. If the receiving station is a base station $30_1$, the CONSTANT VALUE is preferably sent via Layer 3 signaling.

The weighting value, $\alpha$, determined by the quality measurement device **94,** is a measure of the quality of the estimated path loss and is, preferably, based on the number of time slots $36_1$-$36_n$ between the time slot, n, of the last path loss estimate and the first time slot of the communication transmitted by the transmitting station **112**. The value of $\alpha$ is from zero to one. Generally, if the time difference between the time slots is small, the recent path loss estimate will be fairly accurate and $\alpha$ is set at a value close to one. By contrast, if the time difference is large, the path loss estimate may not be accurate and the long term average path loss measurement is most likely a better estimate for the path loss. Accordingly, $\alpha$ is set at a value closer to zero.

Equation 5 is one equation for determining $\alpha$, although others may be used.

$$\alpha = 1 - (D - 1)/D_{max} \qquad \text{Equation 5}$$

The value, D, is the number of time slots $36_1$-$36_n$ between the time slot of the last path loss estimate and the first time slot of the transmitted communication which will be referred to as the time slot delay. If the delay is one time slot, $\alpha$ is one. $D_{max}$ is the maximal possible delay. A typical value for a frame having fifteen time slots is six. If the delay is $D_{max}$ or greater, $\alpha$ approaches zero. Using the transmit power level, $P_{TS}$, determined by a transmit power calculation device 98, the weighted open loop power controller **100** sets the transmit power of the transmitted communication, step **48.**

Data to be transmitted in a communication from the transmitting station **112** is produced by a data generator **102**. The communication data is spread and time-multiplexed with a training sequence by the spreading and training sequence insertion device **104** in the appropriate time slots and codes of the assigned resource units. The spread signal is amplified by the amplifier **106** and modulated by the modulator **108** to radio frequency.

The weighted open loop power controller **100** controls the gain of the amplifier **106** to achieve the determined transmit power level, $P_{TS}$, for the communication. The communication is passed through the isolator **84** and radiated by the antenna **82.**

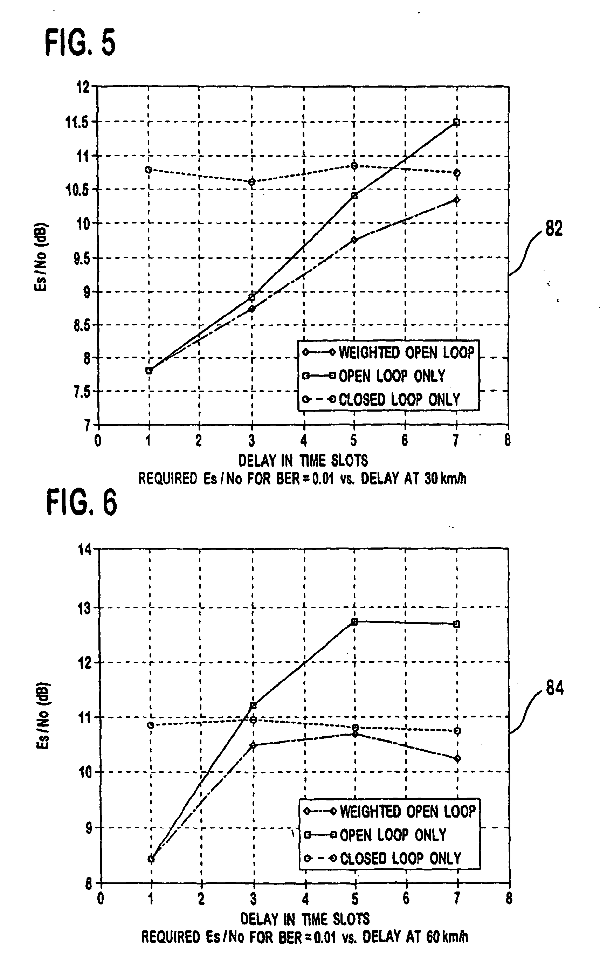

**Figures 5** and **6** depict graphs **82, 84** illustrating the performance of a weighted open loop system using **Equation 4. Equation 5** is used to calculate $\alpha$. These graphs **82, 84** depict the results of simulations comparing the performance of a weighted open loop, an open loop and a closed loop system controlling the transmission power level of the transmitting station **112**. The simulations address the performance of these systems in a fast fading channel under steady-state conditions. In this example, the receiving station is a base station **30₁** and the transmitting station is a UE **32₁**. For the simulation, the UE **32₁** was a mobile station. The simulated base station **30₁** used two antenna diversity for reception with each antenna having a three finger RAKE receiver. The simulation approximated a realistic channel and SIR estimation based on a midamble sequence of burst type 1 field in the presence of additive white Gaussian noise (AWGN). The simulation used an International Telecommunication Union (ITU) Pedestrian B type channel and QPSK modulation. Interference levels were assumed to be accurately known with no uncertainty. Channel coding schemes were not considered. The CONSTANT VALUE and $L_0$ were set at 0 db.

For each of the power control techniques, **Figure 5,** graph **82** shows the energy for a transmitted complex symbol in decibels (Es/No) required to maintain a BER of 1% for various time slot delays, D, with the UE **32₁** moving at 30 kilometers per hour (km/h). As shown, at lower time slot delays, both weighted open loop and open loop outperform closed loop. For higher time slot delays, weighted open loop outperforms both open loop and closed loop. As shown in **Figure 6,** graph **84,** similar results occur if the UE **32₁** is traveling at 60 km/h.

**Claims**

1. A weighted open loop power control transmitter (112) for controlling transmission power levels using a spread spectrum time division duplex, TDD, technique having frames with timeslots for communication, the transmitter comprising:

    a demodulator (86) configured to receive a modulated communication burst and the transmitted power level of the communication burst from a receiving station (110), said demodulator further configured to generate a baseband signal;
    a channel estimation device (88) configured to receive the baseband signal and extract channel information from the baseband signal;
    a data estimation device (90) configured to interpret the transmitted power level of the communication burst; and
    a weighted open loop power controller (100) comprising:

        a power measurement device (92) for receiving the extracted channel information from the channel estimation device and measuring the power level of the received communication burst,
        a pathloss estimation device (94) configured to estimate the pathloss, L, based on, in part, the interpreted transmitted power level and the measured power level, and update a long term average of the pathloss, L0, between the receiving station and the transmitter,

a quality measurement device (96) to determine the quality of the estimated pathloss and weight the estimated pathloss by a weighting factor, $\alpha$, and the long term average of the pathloss, L0, by a weighting factor, $1-\alpha$, wherein $\alpha$ is from zero to one, and

a transmit power calculation device (98) for determining the power level of the transmitter by adding a desired receiver power level to the sum of $\alpha(L-L0)$, L0 and a constant value.

2. The transmitter of claim 1, wherein the pathloss estimation device is configured to determine the pathloss, L, by subtracting the measured power level from the interpreted transmitted power level.

3. The transmitter of claim 1 or 2, wherein the quality of the estimated path loss is based on the number of time slots $(36_1-36_n)$ between the time slot, n, of the last path loss estimate and the first time slot of the communication transmitted by the transmitter.

4. The transmitter of claim 1, wherein the quality, $\alpha$, of the estimated path loss is determined by $\alpha = 1 - (D-1)/(D_{max}-1)$, wherein D is a time slot delay defined by the number of time slots $(36_1-36_n)$ between the time slot, n, of the last path loss estimate and the first time slot of the communication transmitted by the transmitter and wherein $D_{max}$ is the maximum possible delay.

**Patentansprüche**

1. Sender (112) mit Leistungsregelung mit gewichteter offener Schleife zum Regeln von Sendeleistungen unter Anwendung einer Streuspektrum-Zeitduplex(TDD)-Technik, welche Rahmen mit Zeitschlitzen für die Kommunikation aufweist, wobei der Sender das Folgende umfasst:

einen Demodulator (86), der dafür konfiguriert ist, einen modulierten Kommunikations-Datenblock und die Sendeleistung des Kommunikations-Datenblocks von einer Empfangsstation (110) zu empfangen, wobei der Demodulator ferner dafür konfiguriert ist, ein Basisbandsignal zu erzeugen;

eine Kanalschätzeinheit (88), die dafür konfiguriert ist, das Basisbandsignal zu empfangen und aus dem Basisbandsignal Kanalinformationen zu extrahieren;

eine Datenschätzeinheit (90), die dafür konfiguriert ist, die Sendeleistung des Kommunikations-Datenblocks zu interpretieren; und

eine Leistungsregelung (100) mit gewichteter offener Schleife, welche das Folgende umfasst:

eine Leistungsmesseinheit (92) zum Empfang der extrahierten Kanalinformationen von der Kanalschätzeinheit und zum Messen der Leistung des empfangenen Kommunikations-Datenblocks,

eine Funkfelddämpfungs-Schätzeinheit (94), die dafür konfiguriert ist, die Funkfelddämpfung L zumindest teilweise basierend auf der interpretierten Sendeleistung und der gemessenen Leistung abzuschätzen und einen Langzeit-Mittelwert der Funkfelddämpfung **L0** zwischen der Empfangsstation und dem Sender zu aktualisieren,

eine Qualitätsmesseinheit (96) zum Ermitteln der Qualität der abgeschätzten Funkfelddämpfung und zum Wichten der abgeschätzten Funkfelddämpfung mit einem Wichtungsfaktor $\alpha$ und des Langzeit-Mittelwerts der Funkfelddämpfung L0 mit einem Wichtungsfaktor $1-\alpha$, wobei $\alpha$ einen Wert von Null bis Eins aufweisen kann, und

eine Sendeleistungs-Berechnungseinheit (98) zum Ermitteln der Leistung des Senders durch Addieren einer gewünschten Empfängerleistung zu der Summe von $\alpha(L-L0)$, L0 und einem konstanten Wert.

2. Sender nach Anspruch 1, wobei die Funkfelddämpfungs-Schätzeinheit dafür konfiguriert ist, die Funkfelddämpfung L durch Subtrahieren der gemessenen Leistung von der interpretierten Sendeleistung zu ermitteln.

3. Sender nach Anspruch 1 oder 2, wobei die Qualität der abgeschätzten Funkfelddämpfung auf der Anzahl der Zeitschlitze $(36_1-36_n)$ zwischen dem Zeitschlitz n der letzten Abschätzung der Funkfelddämpfung und dem ersten Zeitschlitz der von dem Sender gesendeten Kommunikation basiert.

4. Sender nach Anspruch 1, wobei die Qualität $\alpha$ der abgeschätzten Funkfelddämpfung durch $\alpha = 1 - (D-1)/(D_{max}-1)$ ermittelt wird, wobei D für eine Zeitschlitzverzögerung steht, die durch die Anzahl der Zeitschlitze $(36_1-36_n)$ zwischen

dem Zeitschlitz n der letzten Abschätzung der Funkfelddämpfung und dem ersten Zeitschlitz der von dem Sender gesendeten Kommunikation definiert ist, und wobei $D_{max}$ für die maximale mögliche Verzögerung steht.

**Revendications**

1. Emetteur de commande de puissance en boucle ouverte pondérée (112) pour commander des niveaux de puissance de transmission en utilisant une technique duplex à répartition dans le temps, TDD, de spectre étalé ayant des trames avec des intervalles de temps pour la communication, l'émetteur comprenant :

   un démodulateur (86) configuré pour recevoir une rafale de communication modulée et le niveau de puissance transmise de la rafale de communication depuis une station de réception (110), ledit démodulateur étant en outre configuré pour générer un signal de bande de base ;
   un dispositif d'estimation de canal (88) configuré pour recevoir le signal de bande de base et extraire des informations de canal du signal de bande de base ;
   un dispositif d'estimation de données (90) configuré pour interpréter le niveau de puissance transmise de la rafale de communication ; et
   un organe de commande de puissance en boucle ouverte pondérée (100) comprenant :

      un dispositif de mesure de puissance (92) pour recevoir les informations de canal extraites du dispositif d'estimation de canal et pour mesurer le niveau de puissance de la rafale de communication reçue,
      un dispositif d'estimation d'affaiblissement de propagation (94) configuré pour estimer l'affaiblissement de propagation, L, sur la base en partie du niveau de puissance transmise interprété et du niveau de puissance mesuré, et pour mettre à jour une moyenne à long terme de l'affaiblissement de propagation, L0, entre la station de réception et l'émetteur,
      un dispositif de mesure de qualité (96) pour déterminer la qualité de l'affaiblissement de propagation estimé et pour pondérer l'affaiblissement de propagation estimé par un facteur de pondération, $\alpha$, et la moyenne à long terme de l'affaiblissement de propagation, L0, par un facteur de pondération, $1-\alpha$, où $\alpha$ est de zéro à un, et
      un dispositif de calcul de puissance de transmission (98) pour déterminer le niveau de puissance de l'émetteur en ajoutant un niveau de puissance de récepteur souhaité à la somme de $\alpha(L-L0)$, L0 et une valeur constante.

2. Emetteur selon la revendication 1, dans lequel le dispositif d'estimation d'affaiblissement de propagation est configuré pour déterminer l'affaiblissement de propagation, L, en soustrayant le niveau de puissance mesuré du niveau de puissance transmise interprété.

3. Emetteur selon la revendication 1 ou 2, dans lequel la qualité de l'affaiblissement de propagation estimé est basée sur le nombre d'intervalles de temps ($36_1$-$36_n$) entre l'intervalle de temps, n, de la dernière estimation d'affaiblissement de propagation et le premier intervalle de temps de la communication transmise par l'émetteur.

4. Emetteur selon la revendication 1, dans lequel la qualité, $\alpha$, de l'affaiblissement de propagation estimé est déterminé par $\alpha=1-(D-1)/(D_{max}-1)$, où D est un délai d'intervalle de temps défini par le nombre d'intervalles de temps ($36_1$-$36_n$) entre l'intervalle de temps, n, de la dernière estimation d'affaiblissement de propagation et le premier intervalle de temps de la communication transmise par l'émetteur, et où $D_{max}$ est le délai possible maximum.

FIG. 1

FIG. 2

EP 2 015 466 B1

# FIG. 3

TRANSMIT A COMMUNICATION FROM
THE RECEIVING STATION — 38

DETERMINE THE RECEIVED POWER LEVEL
OF THE COMMUNICATION AT THE
TRANSMITTING STATION — 40

DETERMINE AN ESTIMATED PATH LOSS BETWEEN
THE RECEIVING AND TRANSMITTING STATION BY
SUBTRACTING THE RECEIVED COMMUNICATION'S
POWER LEVEL IN dB FROM THE COMMUNICATION'S
TRANSMISSION POWER LEVEL IN dB — 42

UPDATE LONG TERM AVERAGE OF
THE PATH LOSS ESTIMATE — 44

DETERMINE THE QUALITY OF THE
ESTIMATED PATH LOSS — 46

SETTING THE TRANSMITTING STATION'S POWER
LEVEL BY WEIGHTING THE ESTIMATED
PATH LOSS AND LONG TERM AVERAGE OF THE
PATH LOSS BASED ON THE ESTIMATE'S QUALITY — 48

FIG. 4

## FIG. 5

Es / No (dB)

82

DELAY IN TIME SLOTS

REQUIRED Es / No FOR BER = 0.01 vs. DELAY AT 30 km/h

◇—◇ WEIGHTED OPEN LOOP
▭—▭ OPEN LOOP ONLY
◦ – ◦ CLOSED LOOP ONLY

## FIG. 6

Es / No (dB)

84

DELAY IN TIME SLOTS

REQUIRED Es / No FOR BER = 0.01 vs. DELAY AT 60 km/h

◇—◇ WEIGHTED OPEN LOOP
▭—▭ OPEN LOOP ONLY
◦ – ◦ CLOSED LOOP ONLY

**REFERENCES CITED IN THE DESCRIPTION**

**Patent documents cited in the description**

- US 5056109 A, Gilhousen
- EP 0462952 A

- WO 9845962 A